# EUROPÄISCHE PATENTSCHRIFT

(11) **EP 4 141 309 B1**
(45) Veröffentlichungstag und Bekanntmachung des Hinweises auf die Patenterteilung: **19.03.2025**
(21) Anmeldenummer: 21193151.4
(22) Anmeldetag: 26.08.2021
(51) Int. Cl.: F16L 27/04, F16L 27/06, F16L 47/18, B29C 65/02, B29C 65/00, B29C 65/48

(54) **KUGELGELENKFITTING**
BALL JOINT FITTING
RACCORD DE JOINT À ROTULE

(43) Veröffentlichungstag der Anmeldung: 01.03.2023
(73) Patentinhaber: Georg Fischer Rohrleitungssysteme AG, 8201 Schaffhausen (CH)
(72) Erfinder: Engesser, Benedikt, 78166 Donaueschingen (DE); Stimac, Tomislav, 8200 Schaffhausen (CH); Graf, Marcel, 8212 Neuhausen am Rheinfall (CH); Roesch, Juergen, 79853 Lenzkirch (DE)
(74) Vertreter: Fenner, Seraina

(56) Entgegenhaltungen:
- KR-B1- 101 176 062
- US-A- 4 139 221
- US-A1- 2009 021 006

## Beschreibung

Die Erfindung betrifft einen Kugelgelenkfitting aus Kunststoff zum Verbinden von Kunststoffrohrleitungen gemäss Oberbegriff des Anspruchs 1.

Wenn Rohrleitungen bzw. Rohrleitungsenden miteinander verbunden werden sollen, liegt häufig ein Winkel- oder Achsversatz vor, der ausgeglichen werden muss. Zum Ausgleich eines solchen Winkel- oder Achsversatzes werden in der Regel Verbindungsbauteile eingesetzt, die einen definierten Winkel aufweisen bzw. starr ausgebildet sind und durch den Einbau und die Kombination von mehreren Abwinklungen kann auch ein Achsversatz ausgeglichen werden. Nachteilig hierbei ist, dass für jeden Winkel ein entsprechend eingerichtetes bzw. passendes Verbindungsbauteil vorhanden sein muss. Dies bedeutet, dass eine hohe Anzahl an verschiedenen Winkeln vorhanden sein muss, was hohe Herstellkosten mit sich bringt und einen hohen Lagerbedarf voraussetzt.

Um solche Versatze auszugleichen, sind auch flexible Verbindungsstücke bekannt, meist werden dazu Fittings eingesetzt, die als Zwischenstück einen flexiblen Schlauch vorzugsweise aus einem Elastomer aufweisen. Nachteilig hierbei ist, dass sie nicht den gleich grossen Drücken standhalten wie die Rohrleitung selbst und somit den zulässigen Systemdruck reduzieren.

In der JP6-346997 ist ein Kugelgelenkfitting gezeigt, bei dem die Kugel nach dem Einbau in die Leitung mit einer Elektroschweissung verschweisst wird, so dass eine stoffschlüssige Verbindung zwischen der Kugel und dem Kugelgehäuse erzeugt wird und dadurch eine starre Verbindung entsteht. Einerseits gewährleistet das eine mediumdichte Verbindung andererseits versteift es das Gelenk und die Kugel ist nicht mehr beweglich und kann die Veränderung der Rohrleitung nicht mehr ausgleichen.

Die US 4 139 221 und die US 2009/0021006 A1 offenbaren ebenfalls gelenkige Rohrkupplungen.

Es ist Aufgabe der Erfindung eine Vorrichtung vorzuschlagen, die die Aufnahme eines Winkel- und/oder Achsversatzes in einer Rohrleitung aufnimmt und kontinuierlich ausgleicht und dennoch die Dichtheit gewährleistet sowie dem Systemdruck standhält.

Diese Aufgabe wird erfindungsgemäss dadurch gelöst, dass das Gehäuseober- und Unterteil miteinander stoffschlüssig verbunden sind und ein mediumdichtes Gehäuse bilden, wobei das Gehäuse ohne Zerstörung nicht öffenbar ist, wobei der Gelenkkörper nach dem Einbau des Kugelgelenkfittings mittels Verbinden an den sich gegenüberliegenden Enden der Rohrleitung, stets beweglich im Gehäuse angeordnet ist, wobei das Positionierelement (8) eine Innenkontur aufweist, wobei die Innenkontur als Kugelsegment ausgebildet ist und die Innenkontur mit dem Kugelabschnitt korrespondiert. Das erfindungsgemässe Kugelgelenkfitting weisst keine integrierten Schweisselemente auf. Der Gelenkkörper kann sich zu jederzeit rotativ bewegen bzw. ist schwenkbar gelagert angeordnet was auch nach dem Einbau in das Rohrleitungssystem nicht unterbunden ist.

Das erfindungsgemässe Kugelgelenkfitting ist aus Kunststoff hergestellt und dient dem Verbinden von Kunststoffrohrleitungen bzw. dem Ausgleich von Winkelversätzen wie auch axialen Versätzen. Das erfindungsgemässe Kugelgelenkfitting, welches von beiden Richtungen her durchströmbar ist, beinhaltet einen Gelenkkörper aus Kunststoff, wobei der Gelenkkörper einen Kugelabschnitt aufweist mit einem daran anschliessenden Rohrabschnitt. Der Rohrabschnitt dient dem einseitigen Anschliessen bzw. Verbinden des Kugelgelenkfittings mit der Rohrleitung bzw. einem ersten Ende der Rohrleitung. Das erfindungsgemässe Kugelgelenkfitting beinhaltet zudem ein Gehäuseunterteil in dem der Kugelabschnitt des Gelenkkörpers schwenkbar gelagert ist und ein an das gegenüberliegende Ende des ersten Endes der Rohrleitung anschliessbares Gehäuseoberteil. Das Gehäuseoberteil weist einen Deckel wie ein davon abgehender Rohrabschnitt auf, der dann mit dem Rohrende verbunden wird. Das erfindungsgemässe Kugelgelenkfitting beinhaltet des Weiteren ein Positionierelement, wobei das Positionierelement axial im Gehäuse fixiert angeordnet ist und den Gelenkkörper axial fixiert, wobei der Gelenkkörper ausschliesslich rotativ bewegbar ist. Das Positionierelement ist vorzugsweise als Ring ausgebildet.

Das Positionierelement weist eine Innenkontur auf, die mit dem Kugelabschnitt korrespondiert und die Innenkontur als Kugelsegment ausgebildet ist. Zudem ist ein Sicherungselement zur axialen Fixierung des Positionselements im Gehäuse angeordnet. Vorzugsweise ist das Sicherungselement als Sicherungsring ausgebildet, der in einer dafür vorgensehen Nut am Innenumfang des Gehäuses angeordnet ist. Das Gehäuseober-und Unterteil sind miteinander stoffschlüssig verbunden und bilden ein mediumsdichtes Gehäuse. Des Weiteren ist der Gelenkkörper nach dem Einbau des Kugelgelenkfittings zwischen den beiden Enden der Rohrleitung beweglich bzw. rotativ bewegbar im Gehäuse angeordnet ist. Das heisst auch, dass der Gelenkkörper keine stoffschlüssige Verbindung mit dem Gehäuse eingeht und auch nach dem Anschliessen beweglich gelagert ist. Das Gehäuse kann ohne Zerstörung nicht geöffnet werden bzw. der Gelenkkörper kann nicht herausgenommen werden. Durch diese Fügeart der stoffschlüssigen Verbindung des Gehäuseober- und Unterteils ist gewährleistet, dass es mediumdicht ist. Der Gelenkkörper wird zu keiner Zeit mit dem Gehäuse oder einem anderen Bestandteil des Kugelgelenkfittings fest verbunden bzw. gefügt, vielmehr ist der Gelenkkörper zu jeder Zeit beweglich im Gehäuse angeordnet.

Das Gehäuseunterteil weist eine Innenkontur auf, die als Kugelsegment ausgebildet ist, wodurch der Kugelabschnitt des Gelenkkörpers formschlüssig aufgenommen wird und darin schwenkbar gelagert ist.

Es ist von Vorteil, wenn ein Dichtelement zwischen Kugelabschnitt und Gehäuseunterteil angeordnet ist, das gewährleistet, dass kein Medium aus dem Gehäuse leckt.

Als bevorzugte Ausführungsform hat sich gezeigt, wenn das Positionierelement das Dichtelement axial fixiert. Das Dichtelement ist vorzugsweise zwischen dem Boden des Gehäuseunterteils und dem Positionselement angeordnet.

Vorzugsweise ist am Gehäuseumfang ein Verstärkungsring angerordnet. Da das Gehäuse aus Kunststoff ist, tendiert es dazu sich nach einiger Zeit auszuweiten, wodurch der Gelenkkörper nicht mehr genügend vom Gehäuse umschlossen ist. Um das Aufweiten des Gehäuses zu unterdrücken wird der Verstärkungsring möglichst am Ende des Gehäuses nahe dem Austritt des Gelenkkörpers angeordnet vorzugsweise im unteren Drittel des Gehäuses, wobei der Verstärkungsring vorzugsweise aus einem metallischen Werkstoff ist.

Dadurch, dass der Gelenkkörper im Gehäuseunterteil formschlüssig sowie darin beweglich angeordnet ist, ist es von Vorteil, wenn ein Verstärkungsring am Gehäuseumfang des Gehäuseunterteils angeordnet ist.

Es ist vorteilhaft, wenn das Gehäuseunter- und Oberteil miteinander verschweisst oder verklebt sind, wodurch der benötigte Stoffschluss erzielt wird. Dadurch ist ein mediumdichtes Gehäuse gewährleistet das ohne Zerstörung nicht geöffnet werden kann.

Eine bevorzugte Ausführungsform besteht darin, dass der Gelenkkörper im Übergangsbereich zwischen Kugelabschnitt und Rohrabschnitt eine Verjüngung des Aussendurchmessers aufweist. Dies ermöglicht dem Gelenkkörper einen Schwenkwinkel von min. 45°, vorzugsweise von bis zu 30°. Zudem ist es vorteilhaft, wenn die Austrittsöffnung konisch ausgebildet ist, um dem Gelenkkörper den Schwenkwinkel zu ermöglichen.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: einen Längsschnitt durch ein erfindungsgemässes Kugelfitting mit abgewinkeltem Gelenkkörper und
- Fig. 2: einen Längsschnitt durch ein erfindungsgemässes Kugelfitting gerade ausgerichtet.

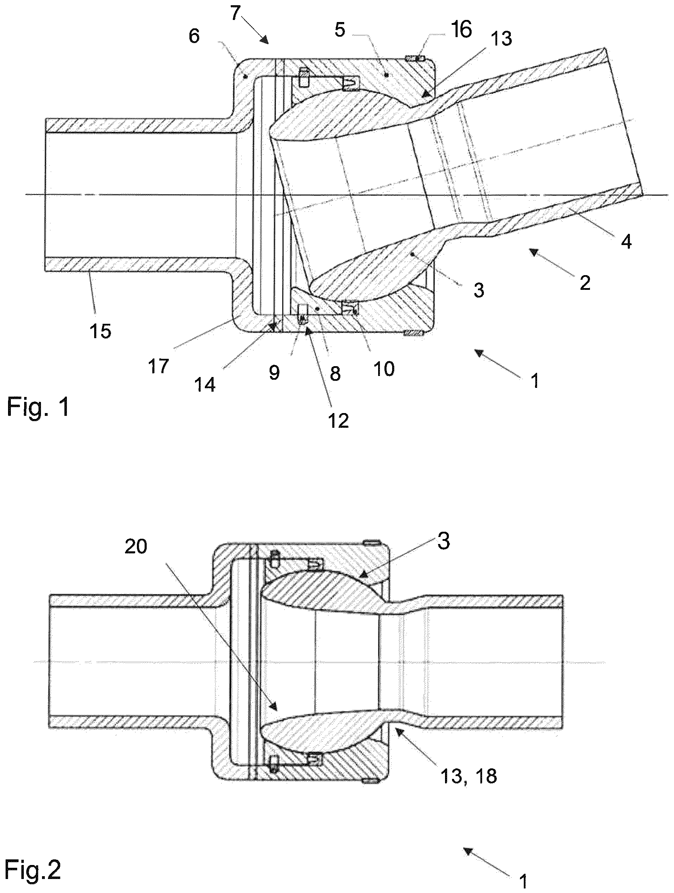

Die in Fig. 1 dargestellte Zeichnung zeigt ein erfindungsgemässes Kugelgelenkfitting 1 aus Kunststoff. Das erfindungsgemässe Kugelgelenkfitting 1 dient dem Verbinden von Kunststoffrohrleitungen bzw. dem Aufnehmen eines Winkel- oder axialen Versatzes von zwei sich gegenüberliegenden Rohrleitungsenden. Das Kugelgelenkfitting 1 beinhaltet einen Gelenkkörper 2, der auf einer Seite einen Kugelabschnitt 3 aufweist und auf der anderen einen Rohrabschnitt 4, wobei die Abschnitte ineinander übergehen und der Gelenkkörper 2 einteilig ausgebildet ist, vorzugsweise als Kunststoffspritzgussteil. Es ist vorteilhaft, wenn am Aussendurchmesser des Gelenkkörpers 2 im Übergangsbereich18 vom Kugelabschnitt 3 in den Rohrabschnitt 4 eine Durchmesserverjüngung 13 des Aussendurchmessers angeordnet ist, dies ermöglicht einen grösseren Schwenkwinkel des Gelenkkörpers 2. Zudem ist es entsprechend vorteilhaft, wenn im Gehäuseunterteil 5 an der Austrittsöffnung 19 der Konturverlauf der Öffnung entsprechend mit der Durchmesserverjüngung 13 korrespondiert, vorzugsweise durch einen Konus. Um einen optimalen Durchfluss des Mediums zu erzielen, welche beidseitig erfolgen kann, weist der Kugelabschnitt 3 eine konische Öffnung 20 auf. Der Gelenkkörper 2 ist in einem Gehäuse 7 angeordnet bzw. der Kugelabschnitt 3. Das Gehäuse 7 besteht aus einem Gehäuseunterteil 5 und einem Gehäuseoberteil 6, wobei die beiden Stirnseiten der beiden Gehäuse 5, 6 miteinander stoffschlüssig verbunden sind und ein mediumdichtes Gehäuse 7 bilden. Die Verbindungsstelle 14 der beiden Gehäuseteile 5, 6 zeigt schematisch den Stoffschluss. Wobei der Stoffschluss vorzugsweise durch Verschweissen oder Kleben erzielt wird. Das Gehäuseoberteil 6 weist auf der einen Seite einen Rohrabschnitt 15 der dem Verbinden an das gegenüberliegende Ende der Rohrleitung dient auf, und auf der anderen Seite einen Deckel 17, der mit dem Gehäuseunterteil 5 stoffschlüssig verbunden ist, wobei der Deckel 17 und der Rohrabschnitt 15 einteilig ausgebildet sind. Im Gehäuse 7 ist ein Positionierelement 8 angeordnet, dass der axialen Fixierung des Gelenkkörpers 2 im Gehäuse 7 dient. Zudem weist das Positionierelement 8 vorzugsweise eine Innenkontur 11 auf, welche der Aussenkontur des Kugelabschnitts 3 entspricht bzw. als Kugelsegment ausgebildet ist, wodurch der Gelenkkörper 2 dreh- bzw. schwenkbar darin gelagert ist. Das Positionierelement 8 ist vorzugsweise mittels eines Sicherungselements 9 im Gehäuse 7 axial fixiert, wobei das Sicherungselement 9 vorzugweise in einer dafür vorgesehenen Nut 12 angeordnet ist. Des Weiteren weist das erfindungsgemässe Kugelgelenkfitting 1 vorzugsweise ein Dichtelement 10 auf, wobei das Dichtelement 10 zwischen dem Positionierelement 8, dem Gehäuseunterteil 5 und dem Kugelabschnitt 3 angeordnet ist. Dies gewährleistet, dass entlang des Aussendurchmessers des Gelenkkörpers 2 kein Mediumsaustritt erfolgen kann und der Gelenkkörper 2 auch nach dem Einbau in eine Rohrleitung beweglich angeordnet ist, um sich den Positions- und Lageveränderungen der Rohrleitung anzupassen, wodurch Spannungen in der Rohrleitung vermieden werden können. Am Aussenumfang des Gehäuses 7, vorzugsweise des Gehäuseunterteils 5, ist ein Verstärkungsring 16 angeordnet, der das Gehäuse davor bewahren soll, dass es sich ausweitet. Da Kunststoff sich in der Regel mit der Zeit weitet und dadurch das Gehäuse 7 bzw. das Gehäuseunterteil 5 und dessen Innendurchmesser dazu tendieren grösser zu werden wäre der Gelenkkörper 2 nicht mehr optimal geführt, würde sogar dazu neigen aus dem Gehäuse zu fallen. Durch die Anordnung des Verstärkungsrings 16 vorzugsweise aus einem metallischen Werkstoff, vorzugsweise im unteren Bereich des Gehäuseunterteils 5 kann eine Vergrösserung der Durchmesser am Gehäuseunterteil 5 unterdrückt werden.

### Bezugszeichenliste

- 1: Kugelgelenkfitting
- 2: Gelenkkörper
- 3: Kugelabschnitt
- 4: Rohrabschnitt
- 5: Gehäuseunterteil
- 6: Gehäuseoberteil
- 7: Gehäuse
- 8: Positionierelement
- 9: Sicherheitselement
- 10: Dichtelement
- 11: Innenkontur Positionierelement
- 12: Nut
- 13: Durchmesserverjüngung
- 14: Verbindungsstelle
- 15: Rohrabschnitt
- 16: Verstärkungsring
- 17: Deckel
- 18: Übergangsbereich
- 19: Austrittsöffnung
- 20: Konische Öffnung

## Patentansprüche

1. Kugelgelenkfitting (1) aus Kunststoff zum Verbinden von Kunststoffrohrleitungen beinhaltend, einen Kugelabschnitt (3) aufweisenden Gelenkkörper (2) mit einem daran anschliessenden Rohrabschnitt (4) zum Verbinden mit einem ersten Ende der Rohrleitung, ein Gehäuseunterteil (5) in dem der Kugelabschnitt (3) des Gelenkkörpers (2) schwenkbar gelagert ist, wobei das Gehäuseunterteil (5) ein Kugelsegment als Innenkontur aufweist, wodurch der Kugelabschnitt (3) des Gelenkkörpers (2) formschlüssig aufgenommen und darin schwenkbar gelagert ist, ein an das gegenüberliegende Ende des ersten Endes der Rohrleitung verbindbares Gehäuseoberteil, ein Positionierelement (8), wobei das Positionierelement (8) axial im Gehäuse (7) fixiert angeordnet ist und den Gelenkkörper (2) axial fixiert, wobei der Gelenkkörper (2) ausschliesslich rotativ bewegbar ist und ein Sicherungselement (9) zur axialen Fixierung des Positionierelements (8), **dadurch gekennzeichnet, dass** das Gehäuseober- und Unterteil (5, 6) miteinander stoffschlüssig verbunden sind und ein mediumdichtes Gehäuse (7) bilden, wobei das Gehäuse ohne Zerstörung nicht öffenbar ist, wobei der Gelenkkörper (2) nach dem Einbau des Kugelgelenkfittings (1) mittels Verbinden an den sich gegenüberliegenden Enden der Rohrleitung, stets beweglich im Gehäuse (7) angeordnet ist, wobei das Positionierelement (8) eine Innenkontur (11) aufweist, wobei die Innenkontur (11) des Positionierelements (8) als Kugelsegment ausgebildet ist und die Innenkontur (11) des Positionierelements (8) mit dem Kugelabschnitt (3) korrespondiert.

2. Kugelgelenkfitting (1) nach Anspruch 1, **dadurch gekennzeichnet, dass** ein Dichtelement (10) zwischen Kugelabschnitt (3) und Gehäuseunterteil (5) angeordnet ist.

3. Kugelgelenkfitting (1) nach Anspruch 2, **dadurch gekennzeichnet, dass** das Positionierelement (8) das Dichtelement (10) axial fixiert.

4. Kugelgelenkfitting (1) nach einem der Ansprüche 1 bis 3, **dadurch gekennzeichnet, dass** am Gehäuseumfang ein Verstärkungsring (16) angerordnet ist.

5. Kugelgelenkfitting (1) nach einem der Ansprüche 1 bis 4, **dadurch gekennzeichnet, dass** ein Verstärkungsring (16) am Gehäuseumfang des Gehäuseunterteils (5) angeordnet ist.

6. Kugelgelenkfitting (1) nach einem der Ansprüche 1 bis 5, **dadurch gekennzeichnet, dass** das Gehäuseunter- und Oberteil (5, 6) miteinander verschweisst oder verklebt sind.

7. Kugelgelenkfitting (1) nach einem der Ansprüche 1 bis 6 **dadurch gekennzeichnet, dass** der Gelenkkörper (2) im Übergangsbereich (18) zwischen Kugelabschnitt (3) und Rohrabschnitt einer Verjüngung (13) des Aussendurchmessers aufweist.

8. Kugelgelenkfitting (1) nach dem Anspruch 7 **dadurch gekennzeichnet, dass** am Gehäuseunterteil (5) an der Austrittsöffnung (19) der Konturverlauf der Öffnung (19) entsprechend mit der Aussendurchmesserverjüngung (13) des Gelenkkörpers (2) korrespondiert.

9. Kugelgelenkfitting (1) nach dem Anspruch 8 **dadurch gekennzeichnet, dass** die Austrittsöffnung (19) konisch ausgebildet ist.

## Claims

1. Ball joint fitting (1) made of plastic for connecting plastics pipelines, comprising a joint body (2) which comprises a ball portion (3) and has a pipe portion (4) joined thereto for connecting to a first end of the pipeline, a housing lower part (5) in which the ball portion (3) of the joint body (2) is pivotably mounted, wherein the housing lower part (5) has a ball segment as inner contour, as a result of which the ball portion (3) of the joint body (2) is pivotably mounted therein and form-fittingly received, a housing upper part which can be connected to the opposite end to the first end of the pipeline, a positioning element (8), wherein the positioning element (8) is axially fixed in the housing (7) and axially fixes the joint body (2), wherein the joint body (2) is exclusively rotatably movable, and a securing element (9) for axially fixing the positioning element (8), **characterized in that** the housing upper and lower parts (5, 6) are integrally bonded with one another and form a media-tight housing (7), wherein the housing cannot be opened non-destructively, wherein, after the ball joint fitting (1) has been installed by being connected to the opposite ends of the pipeline, the joint body (2) is always movable in the housing (7), wherein the positioning element (8) has an inner contour (11), wherein the inner contour (11) of the positioning element (8) is in the form of a ball segment and the inner contour (11) of the positioning element (8) corresponds to the ball portion (3).

2. Ball joint fitting (1) according to Claim 1, **characterized in that** a sealing element (10) is positioned between the ball portion (3) and the housing lower part (5).

3. Ball joint fitting (1) according to Claim **2, characterized in that** the positioning element (8) axially fixes the sealing element (10).

4. Ball joint fitting (1) according to one of Claims 1 to 3, **characterized in that** a reinforcing ring (16) is positioned around the circumference of the housing.

5. Ball joint fitting (1) according to one of Claims 1 to 4, **characterized in that** a reinforcing ring (16) is positioned around the circumference of the housing lower part (5).

6. Ball joint fitting (1) according to one of Claims 1 to 5, **characterized in that** the housing lower and upper parts (5, 6) are welded or adhesively bonded to one another.

7. Ball joint fitting (1) according to one of Claims 1 to 6, **characterized in that** the joint body (2) has a tapering (13) of the outside diameter in the transition region (18) between the ball portion (3) and the pipe portion.

8. Ball joint fitting (1) according to Claim 7, **characterized in that** on the housing lower part (5), at the outlet opening (19), the contour of the opening (19) accordingly corresponds to the tapering (13) of the outside diameter of the joint body (2).

9. Ball joint fitting (1) according to Claim 8, **characterized in that** the outlet opening (19) is conical.

## Revendications

1. Raccord à rotule (1) en matière plastique pour relier des conduites tubulaires en matière plastique, comprenant un corps d'articulation (2) présentant une section sphérique (3) avec une section tubulaire (4) s'y raccordant pour la liaison à une première extrémité de la conduite tubulaire, une partie inférieure de boîtier (5) dans laquelle la section sphérique (3) du corps d'articulation (2) est logée de manière pivotante, la partie inférieure de boîtier (5) présentant un segment sphérique en tant que contour intérieur, par lequel la section sphérique (3) du corps d'articulation (2) est reçue par complémentarité de forme et y est logée de manière pivotante, une partie supérieure de boîtier pouvant être reliée à l'extrémité opposée de la première extrémité de la conduite tubulaire, un élément de positionnement (8), l'élément de positionnement (8) étant agencé de manière fixe axialement dans le boîtier (7) et fixant axialement le corps d'articulation (2), le corps d'articulation (2) étant exclusivement mobile en rotation et un élément de sécurité (9) pour la fixation axiale de l'élément de positionnement (8), **caractérisé en ce que** la partie supérieure et la partie inférieure de boîtier (5, 6) sont reliées entre elles par liaison de matière et forment un boîtier (7) étanche au fluide, le boîtier ne pouvant pas être ouvert sans être détruit, le corps d'articulation (2) étant toujours agencé de manière mobile dans le boîtier (7) après le montage du raccord à rotule (1) au moyen d'une liaison aux extrémités opposées de la conduite tubulaire, l'élément de positionnement (8) présentant un contour intérieur (11), le contour intérieur (11) de l'élément de positionnement (8) étant réalisé sous forme de segment sphérique et le contour intérieur (11) de l'élément de positionnement (8) correspondant au segment sphérique (3).

2. Raccord à rotule (1) selon la revendication **1, caractérisé en ce qu'**un élément d'étanchéité (10) est agencé entre la section sphérique (3) et la partie inférieure de boîtier (5).

3. Raccord à rotule (1) selon la revendication 2, **caractérisé en ce que** l'élément de positionnement (8) fixe axialement l'élément d'étanchéité (10).

4. Raccord à rotule (1) selon l'une quelconque des revendications 1 à 3, **caractérisé en ce qu'**une bague de renforcement (16) est agencée sur la périphérie de boîtier.

5. Raccord à rotule (1) selon l'une quelconque des revendications 1 à 4, **caractérisé en ce qu'**une bague de renforcement (16) est agencée sur la périphérie de boîtier de la partie inférieure de boîtier (5).

6. Raccord à rotule (1) selon l'une quelconque des revendications 1 à 5, **caractérisé en ce que** les parties inférieure et supérieure de boîtier (5, 6) sont soudées ou collées ensemble.

7. Raccord à rotule (1) selon l'une quelconque des revendications 1 à 6, **caractérisé en ce que** le corps d'articulation (2) présente un rétrécissement (13) du diamètre extérieur dans la zone de transition (18) entre la section sphérique (3) et la section tubulaire.

8. Raccord à rotule (1) selon la revendication 7, **caractérisé en ce que** sur la partie inférieure de boîtier (5), au niveau de l'ouverture de sortie (19), le tracé du contour de l'ouverture (19) correspond de manière adéquate au rétrécissement de diamètre extérieur (13) du corps d'articulation (2).

9. Raccord à rotule (1) selon la revendication 8, **caractérisé en ce que** l'ouverture de sortie (19) est réalisée sous forme conique.
